# EUROPÄISCHE PATENTSCHRIFT

(11) **EP 1 639 851 B1**
(45) Veröffentlichungstag und Bekanntmachung des Hinweises auf die Patenterteilung: **04.03.2009**
(21) Anmeldenummer: 04741857.9
(22) Anmeldetag: 22.06.2004
(51) Int. Cl.: H04W 48/18, H04L 29/08

(54) **VERFAHREN ZUR AUSWAHL EINES DIENSTANBIETERS FÜR EINEN VON EINER MOBILEN STATION ÜBER EIN FUNKZUGANGSNETZ EMPFFANGBAREN UND VON WENIGSTENS ZWEI DIENSTANBIETERN ANGEBOTENEN DIENST SOWIE AUSWAHLVORRICHTUNG**
METHOD FOR SELECTING A SERVICE PROVIDER FOR A SERVICE, WHICH CAN BE RECEIVED BY A MOBILE STATION VIA A RADIO ACCESS NETWORK AND WHICH IS PROVIDED BY AT LEAST TWO SERVICE PROVIDERS, AND A CORRESPONDING SELECTING DEVICE
PROCEDE POUR SELECTIONNER UN PRESTATAIRE DE SERVICES POUR UN SERVICE POUVANT ETRE RECU PAR UNE STATION MOBILE PAR L'INTERMEDIAIRE D'UN RESEAU D'ACCES RADIOTELEPHONIQUE ET PROPOSE PAR AU MOINS DEUX PRESTATAIRES DE SERVICES ET DISPOSITIF DE SELECTION CORRESPONDANT

(30) Priorität: 01.07.2003 DE 10329652
(43) Veröffentlichungstag der Anmeldung: 29.03.2006
(73) Patentinhaber: SIEMENS AKTIENGESELLSCHAFT, 80333 München (DE)
(72) Erfinder: HANS, Martin, 31162 Bad Slazdetfurth/Heinde (DE); CHOI, Hyung-Nam, 22117 Hamburg (DE); ECKERT, Michael, 38122 Braunschweig (DE)
(86) Internationale Anmeldenummer: PCT/EP2004/051193
(87) Internationale Veröffentlichungsnummer: WO 2005/004518

(56) Entgegenhaltungen:
- US-A- 6 101 379
- US-A1- 2003 003 933
- US-A1- 2003 017 828
- US-A1- 2003 078 019

## Beschreibung

Die Erfindung betrifft ein Verfahren zur Auswahl eines Dienstanbieters für einen von einer mobilen Station über ein Funkzugangsnetz empfangbaren und von wenigstens zwei Dienstanbietern angebotenen Dienst sowie eine entsprechende Auswahlvorrichtung.

Zur drahtlosen Datenübertragung kann eine Vielzahl von Technologien verwendet werden. Beispielsweise werden Mobilfunknetze mit dem GSM (Global System for Mobile Communications) oder dem UMTS (Universal Mobile Telecommunications System) Standard und drahtlose lokale Netze (WLANs: Wireless Local Area Networks) beispielsweise mit dem IEEE 802.11 (Institute of Electrical and Electronics Engineers), HiperLAN (High Performance LAN) oder Bluetooth Standard betrieben.

Für eine flächendeckende Versorgung von Mobilfunkteilnehmern, beispielsweise Mobiltelefonen oder tragbaren Computern mit einer entsprechenden Funkübertragungsvorrichtung, können Mobilfunknetze, beispielsweise nach dem GSM oder dem UMTS Standard, verwendet werden. Zur Ergänzung in sogenannten Hot Spots, d. h. in kleinen, lokalen Bereichen mit großer Teilnehmerdichte, wie Flughäfen oder Hotels, können WLANs verwendet werden.

Anbieter eines Dienstes in einem Funkkommunikationssystem kann entweder der Betreiber des Funkkommunikationssystems oder ein anderer Dienstanbieter sein, der durch entsprechende Verträge auf die Infrastruktur des Funkkommunikationssystems zugreifen darf.

Für einen Mobilfunkteilnehmer besteht daher unter Umständen die Möglichkeit, einen in einem Funkkommunikationssystem angebotenen Dienst über verschiedene Dienstanbieter zu nutzen. Je nach den Anforderungen, die der Mobilfunkteilnehmer an den gewünschten Dienst stellt, beispielsweise in Bezug auf Preis oder Qualität der Datenübertragung, kann jeweils ein anderer Anbieter dem Mobilfunkteilnehmer die besten Konditionen bieten.

Aus der US 6 101 379 A sowie aus der US 2003/0078019 A1 sind jeweils Verfahren zur Auswahl eines Dienstanbieters in Funkkommunikationssystemen bekannt.

Aus der WO 02/32181 A1 ist ein Verfahren bekannt, bei dem eine mobile Station ein Programm von einem in einem ersten Land aktiven Betreiber eines Funkkommunikationssystem anfordert und empfängt. Mit Hilfe des Programms kann in einem zweiten Land ein kostengünstiger Betreiber eines Funkkommunikationssystems für die mobile Station ausgewählt werden kann. Bei der Anforderung eines Telekommunikationsdienstes in dem zweiten Land steuert das Programm über ein Funkkommunikationssystem des zweiten Lands eine Kommunikation mit einem Erreichbarkeitsassistenten, der mit dem Funkkommunikationssystem des ersten Landes verbunden ist. Von dem Erreichbarkeitsassistenten erhält die mobile Station eine Liste der Betreiber von Funkkommunikationssystemen in dem zweiten Land zusammen mit einer Information über die Preise der Betreiber. Der Benutzer der mobilen Station kann nun entweder selbst einen der Betreiber auswählen, oder das Programm wählt automatisch den günstigsten Betreiber für den angeforderten Telekommunikationsdienst aus.

Der Erfindung liegt daher die Aufgabe zugrunde, ein vorteilhaftes Verfahren zur Auswahl eines Dienstanbieters für einen von einer mobilen Station über ein Funkzugangsnetz eines Funkkommunikationssystems empfangbaren und von wenigstens zwei Dienstanbietern über das Funkzugangsnetz des Funkkommunikationssystems angebotenen Dienst anzugeben.

Diese Aufgabe wird mit dem Verfahren und der Auswahlvorrichtung gemäß den unabhängigen Ansprüchen gelöst.

Vorteilhafte Aus- und Weiterbildungen der Erfindung sind Gegenstand der abhängigen Ansprüche.

In dem erfindungsgemäßen Verfahren zur Auswahl eines Dienstanbieters für einen von einer mobilen Station über ein Funkzugangsnetz empfangbaren und von wenigstens zwei Dienstanbietern angebotenen Dienst empfängt eine Auswahlvorrichtung von der mobilen Station über eine Funkschnittstelle eine Aufforderung zur Auswahl des Dienstanbieters, werden die Dienstanbieter durch die Auswahlvorrichtung jeweils zur Angabe eines Werts eines Auswahlparameters aufgefordert und wählt die Auswahlvorrichtung in Abhängigkeit von den angegebenen Werten des Auswahlparameters einen der Dienstanbieter für den Dienst aus.

Die Auswahlvorrichtung kann aus einer Vielzahl von Dienstanbietern denjenigen Dienstanbieter auswählen, der zum Zeitpunkt der Aufforderung durch die mobile Station den für die mobile Station günstigsten Auswahlparameter angibt. Ein Auswahlparameter ist beispielsweise der für den Dienst geforderte Preis, die angebotene Verbindungsqualität oder die Datenrate mit der der jeweilige Dienstanbieter den Dienst übertragen wird. Dadurch, dass die Auswahlvorrichtung über die Funkschnittstelle mit der mobilen Station verbunden ist, kann mit einer minimalen Signalisierung, nämlich der Aufforderung durch die mobile Station, einen Dienstanbieter auszuwählen, der günstigste Dienstanbieter ausgewählt werden. Die Auswahlvorrichtung gehört beispielsweise zum Funkkommunikationssystem oder ist extern angeordnet und vorzugsweise leitungsgebunden mit dem Funkkommunikationssystem verbunden.

Nach einer vorteilhaften Weiterbildung wird die mobile Station über den für den Dienst ausgewählten Dienstanbieter informiert. Die mobile Station kann nun selbst entscheiden, ob sie eine Verbindung mit dem ausgewählten Dienstanbieter aufbaut. Sie hat so die Möglichkeit, auf den Dienst zu verzichten oder eine neue Aufforderung an die Auswahlvorrichtung zu senden.

Durch eine erneute Aufforderung könnte möglicherweise ein noch günstigerer Dienstanbieter ausgewählt werden.

In einer alternativen Ausgestaltung der Erfindung wird der mobilen Station der für den Dienst ausgewählte Dienstanbieter von der Auswahlvorrichtung für einen Verbindungsaufbau über die Funkschnittstelle zugewiesen. Die mobile Station erhält so automatisch, als Folge ihrer Aufforderung zur Auswahl eines Dienstanbieters, den für den gewünschten Dienst günstigsten Dienstanbieter zugewiesen, d. h. die Verbindung wird initiiert durch die Auswahlvorrichtung zwischen der mobilen Station und dem günstigsten Dienstanbieter aufgebaut.

Besonders vorteilhaft ist, wenn ein erstes Zeitintervall festgelegt wird, innerhalb dessen die Dienstanbieter nach der Aufforderung zur Angabe der Werte des Auswahlparameters ihre Werte angeben können. Auf diese Weise wird sichergestellt, dass die Auswahlvorrichtung nicht unnötig lange auf die Angabe von Werten des Auswahlparameters wartet. Anhand der innerhalb des ersten Zeitintervalls empfangenen Werte des Auswahlparameters kann die Auswahlvorrichtung entweder eine Auswahl treffen oder gegebenenfalls eine erneute Aufforderung zur Angabe eines Wertes des Auswahlparameters an die Dienstanbieter senden.

Damit die Auswahl eines Dienstanbieters innerhalb einer aus Sicht der mobilen Station nicht zu langen Zeitspanne erfolgt, ist es zweckmäßig, wenn ein zweites Zeitintervall festgelegt wird, nach dessen Ablauf die Auswahl eines Dienstanbieters für den Dienst erfolgt.

In einer besonders bevorzugten Ausgestaltung der Erfindung werden die nach Ablauf des ersten Zeitintervalls von den Dienstanbietern angegebenen Werte des Auswahlparameters miteinander verglichen, wird ein Dienstanbieter mit dem für die mobile Station günstigsten Wert des Auswahlparameters ermittelt, und wird wenigstens ein Teil der Dienstanbieter durch die Auswahlvorrichtung erneut aufgefordert, innerhalb eines dritten, festlegbaren Zeitintervalls jeweils einen Wert des Auswahlparameters anzugeben. Auf diese Weise haben die Dienstanbieter die Möglichkeit, ihr ursprüngliches Angebot zu ändern und durch die Änderung den bisher günstigsten Dienstanbieter zu unterbieten, d. h. selbst günstigster Dienstanbieter zu werden. Selbstverständlich kann die Auswahlvorrichtung auch den Dienstanbieter mit dem günstigsten Wert des Auswahlparameters erneut zur Angabe eines Wertes des Auswahlparameters auffordern, um auch diesem Dienstanbieter die Möglichkeit zu bieten einer Unterbietung durch andere Dienstanbieter vorzubeugen.

Sinnvollerweise wird der günstigste Wert des Auswahlparameters den Dienstanbietern, zusammen mit der erneuten Aufforderung einen Wert des Auswahlparameters anzugeben, mitgeteilt. Ähnlich wie bei einer Auktion, bei der die Bieter den aktuellen Preis kennen, und anhand dessen ihr nächstes Gebot besser festlegen können, wird durch die Mitteilung des günstigsten Wertes des Auswahlparameters den Dienstanbietern eine Möglichkeit geboten, anhand des bekannten günstigsten Wertes zu kalkulieren, ob und wie weit sie den günstigsten Wert des Auswahlparameters unterbieten wollen.

Eine Weiterbildung der Erfindung sieht vor, dass die Dienstanbieter, zusammen mit der erneuten Aufforderung einen Wert des Auswahlparameters anzugeben, informiert werden, falls derselbe günstigste Wert des Auswahlparameters von wenigstens zwei Dienstanbietern angegeben wurde. Diese Information ist für die günstigsten Dienstanbieter von Vorteil, da der Auswahlvorrichtung zur Auswahl eines Dienstanbieters in diesem Fall nur die Möglichkeit bleibt, eine Auswahl durch eine Auslosung zu treffen. Möchte ein Dienstanbieter eine Auslosung verhindern, hat er durch die Information über das Vorliegen derselben günstigsten Werte des Auswahlparameters die Möglichkeit, seinen eigenen Wert des Auswahlparameters zu ändern, d. h. zu unterbieten, um so der einzige Dienstanbieter mit dem günstigsten Wert des Auswahlparameters zu werden.

Besonders vorteilhaft ist, wenn der Auswahlparameter von der mobilen Station vorgegeben wird. Die mobile Station kann so selbst entscheiden, welches Auswahlkriterium bei der Auswahl eines Dienstanbieters verwendet werden soll.

Vorteilhafterweise wird als Auswahlparameter ein Preis des Dienstes verwendet.

Alternativ oder zusätzlich ist es vorteilhaft, wenn als Auswahlparameter eine Übertragungsqualität des Dienstes verwendet wird.

Die Erfindung wird im folgenden anhand von in den Figuren dargestellten Ausführungsbeispielen näher erläutert. Es zeigen:
- Fig. 1: ein erfindungsgemäßes Funkkommunikationssystem mit mehreren Dienstanbietern und
- Fig. 2: eine erfindungsgemäße Auswahl eines günstigsten Dienstanbieters.

Gleiche Bezugszeichen in den Figuren bezeichnen gleiche Gegenstände.

Eine mobile Station ist jede Station, die Dienste über eine Funkschnittstelle empfangen kann. Im nachfolgenden wird als mobile Station eine Teilnehmerstation betrachtet. Eine Teilnehmerstation ist beispielsweise ein Mobiltelefon oder auch eine ortsbewegliche Vorrichtung zur Übertragung von Bild-und/oder Tondaten, zum Fax-, Short Message Service SMS- und Email-Versand und zum Internet-Zugang. Es handelt sich mithin um eine allgemeine Sende- und/oder Empfangseinheit eines Funkkommunikationssystems.

Unter Diensten sind alle Arten von Kommunikationsangeboten zu verstehen, die einer Teilnehmerstation über die Funkschnittstelle angeboten werden. Unter Diensten sind somit beispielsweise Sprachverbindungen, Verbindungen zur Übertragung von Datenpaketen für Software Downloads oder Videoübertragungen, oder auch Positionsbestimmungen, z. B. mittels GPS (Global Positioning System), zu verstehen.

Die Erfindung kann vorteilhaft in beliebigen Funkkommunikationssystemen verwendet werden, die über wenigstens zwei Dienstanbieter für einen angebotenen Dienst verfügen. Unter Funkkommunikationssystemen sind beliebige Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM oder dem UMTS Standard. Auch zukünftige Mobilfunksysteme beispielsweise der vierten Generation und drahtlose lokale Netze (WLANS) sollen unter Funkkommunikationssystemen verstanden werden.

Im folgenden wird die Erfindung am Beispiel eines drahtlosen lokalen Netzes beschrieben, ohne jedoch darauf beschränkt zu sein.

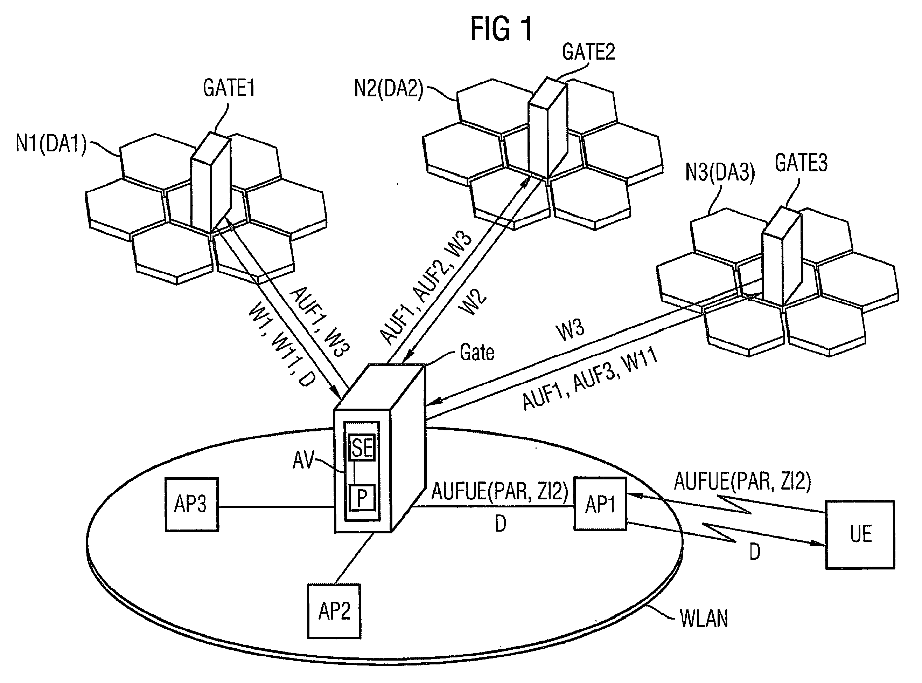

In Figur 1 ist schematisch ein drahtloses lokales Netz PLAN dargestellt. Das drahtlose lokale Netz WLAN verfügt in diesem Ausführungsbeispiel über drei Zugangspunkte (engl.: access points) AP1, AP2, AP3, über die Teilnehmerstationen Verbindungen zu dem WLAN aufbauen können. Mit einem ersten Zugangspunkt AP1 ist eine Teilnehmerstation UE über eine Funkverbindung verbunden.

Gesteuert wird eine Datenübertragung innerhalb des WLAN durch eine Kontrolleinheit GATE, mit der die Zugangspunkte AP1, AP2, AP3 eine vorzugsweise leitungsgebundene Verbindung haben. Die Kontrolleinheit GATE steuert weiterhin die Kommunikation mit drei weiteren Funkkommunikationssystemen N1, N2, N3, die beispielsweise gemäß dem GSM oder dem UMTS Standard betrieben werden. Die drei Funkkommunikationssysteme N1, N2, N3, die jeweils von unterschiedlichen Dienstanbietern DA1, DA2, DA3 betrieben werden, verfügen jeweils über eine Steuereinheit GATE1, GATE2, GATE3, die vorzugsweise leitungsgebunden mit der Kontrolleinheit GATE verbunden sind.

Die Teilnehmerstation UE möchte über das WLAN einen Dienst D empfangen, der von dem ersten Dienstanbieter DA1, dem zweiten Dienstanbieter DA2 und dem dritten Dienstanbieter DA3 angeboten wird. Um eine Auswahl eines Dienstanbieters DA1, DA2, DA3 zur Übertragung des Dienstes D zu ermöglichen, legt die Teilnehmerstation UE einen Auswahlparameter PAR fest, anhand dessen eine Auswahlvorrichtung AV der Kontrolleinheit GATE einen Dienstanbieter auswählen kann. In diesem Ausführungsbeispiel ist der Auswahlparameter PAR der Preis, den der Empfang des Dienstes kosten soll. Selbstverständlich kann auch eine Übertragungsqualität oder eine Datenrate oder eine Kombination dieser Kriterien als Auswahlparameter PAR festgelegt werden. Insbesondere ist es auch möglich, dass der Auswahlparameter PAR nicht von der Teilnehmerstation UE festgelegt wird sondern bereits in der Auswahlvorrichtung AV gespeichert vorliegt, d. h. beispielsweise vom WLAN festgelegt wird. Für unterschiedliche Dienste können unterschiedliche Auswahlparameter in der Auswahlvorrichtung AV gespeichert sein.

Die Auswahlvorrichtung AV kann selbstverständlich auch als separate Einheit im WLAN oder auch außerhalb des WLAN angeordnet und mit der Kontrolleinheit GATE vorzugsweise leitungsgebunden verbunden sein.

In dem in Figur 1 dargestellten Ausführungsbeispiel übermittelt die Teilnehmerstation UE den von ihr festgelegten Auswahlparameter PAR, d. h. den Preis des Dienstes D, über die Funkverbindung an die Auswahlvorrichtung AV, die eine Sende-und Empfangseinheit SE zum Empfang des Auswahlparameters PAR aufweist. Gleichzeitig teilt die Teilnehmerstation UE der Auswahlvorrichtung AV ein zweites Zeitintervall ZI mit, innerhalb dessen die Auswahlvorrichtung AV einen Dienstanbieter DA1, DA2, DA3 für den von der Teilnehmerstation UE angeforderten Dienst D ausgewählt haben muss. Die Auswahlvorrichtung AV generiert und übermittelt mittels einer Steuereinheit P und mittels der Sende- und Empfangseinheit SE Aufforderungen AUF1, AUF2, AUF3 zur Angabe eines Wertes des Auswahlparameters PAR an die drei Dienstanbieter DA1, DA2, DA3 der drei Funkkommunikationssysteme N1, N2, N3 und empfängt von den Dienstanbietern DA1, DA2, DA3 die jeweiligen Werte W1, W2, W3, W11 des Auswahlparameters PAR. Die Auswahlvorrichtung AV wählt anhand eines konfigurierbaren Verfahrens den ersten Dienstanbieter DA1 zur Übertragung des Dienstes D an die Teilnehmerstation UE aus.

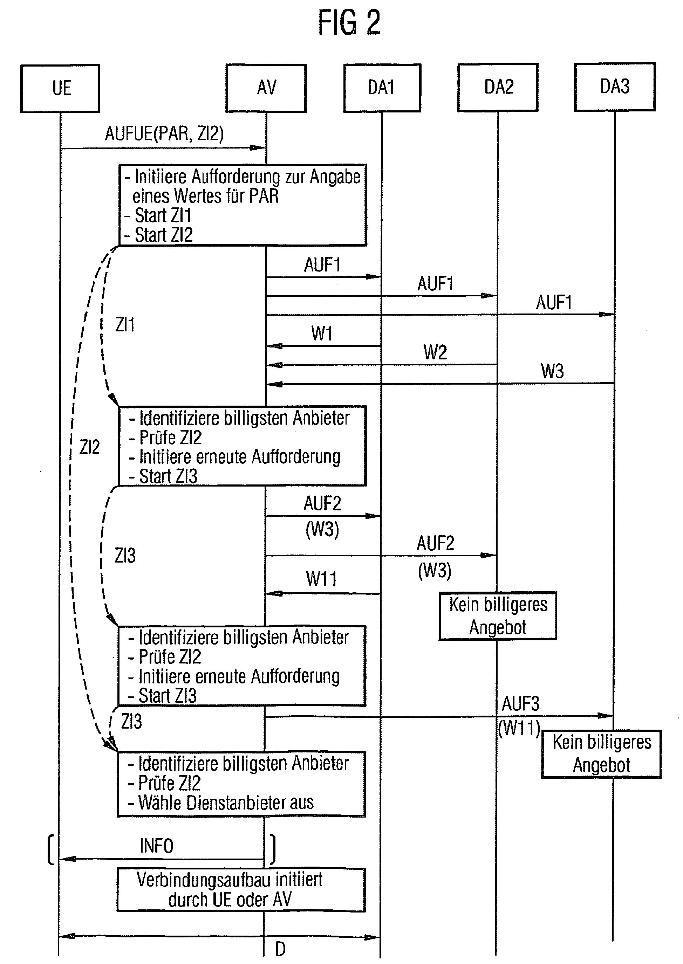

Ein möglicher Ablauf eines Verfahrens zur Auswahl eines Dienstanbieters DA1, DA2, DA3, ist in Figur 2 schematisch dargestellt. Der zeitliche Ablauf der Auswahl eines Dienstanbieters DA1, DA2, DA3 ist in Figur 2 von oben nach unten zu lesen.

Die Teilnehmerstation UE sendet die Aufforderung AUFUE zur Auswahl eines Dienstanbieters DA1, DA2, DA3 zusammen mit der Angabe des zweiten Zeitintervalls ZI2 an die Auswahlvorrichtung AV des WLAN. Die Auswahlvorrichtung AV übermittelt an die drei Dienstanbieter DA1, DA2, DA3 eine erste Aufforderung AUF1 zur Angabe eines Wertes des Auswahlparameters PAR. Beispielsweise fordert die Auswahlvorrichtung AV zur Angabe eines vom jeweiligen Dienstanbieter DA1, DA2, DA3 geforderten Preises des Dienstes auf. Gleichzeitig mit der ersten Aufforderung AUF1 startet die Auswahlvorrichtung AV einen ersten Zähler zur Ermittlung eines ersten Zeitintervalls ZI1, das festlegt, wie lange die Auswahlvorrichtung AV auf Werte des Auswahlparameters PAR von den Dienstanbietern DA1, DA2, DA3 wartet. Gleichzeitig mit dem ersten Zähler wird auch ein zweiter Zähler gestartet, der das zweite Zeitintervall ZI2 ermittelt, das wie bereits oben erwähnt angibt, wie lange die Auswahl eines Dienstanbieters DA1, DA2, DA3 insgesamt dauern darf.

Die Dienstanbieter DA1, DA2, DA3 übertragen innerhalb des ersten Zeitintervalls ZI1 ihre Werte W1, W2, W3 des Auswahlparameters PAR an die Auswahlvorrichtung AV. Die Auswahlvorrichtung AV ermittelt den Dienstanbieter DA3 mit dem für die Teilnehmerstation UE günstigsten Wert des Auswahlparameters, d. h. den billigsten Dienstanbieter, in diesem Fall den dritten Dienstanbieter DA3 und prüft, ob das zweite Zeitintervall ZI2 bereits abgelaufen ist. Wäre das zweite Zeitintervall ZI2 abgelaufen, würde der dritte Dienstanbieter DA3 als Anbieter des Dienstes D ausgewählt. Das zweite Zeitintervall ZI2 ist jedoch noch nicht abgelaufen und die Auswahlvorrichtung AV initiiert daher eine zweite Aufforderung AUF2 zur Angabe eines Wertes des Auswahlparameters PAR an den ersten und zweiten Dienstanbieter DA1, DA2, damit diese Dienstanbieter DA1, DA2 den dritten Dienstanbieter DA3 unterbieten können. Zusammen mit der erneuten Aufforderung AUF2 teilt die Auswahlvorrichtung AV den beiden Dienstanbietern DA1, DA2 den Wert W3 des Auswahlparameters des dritten Dienstanbieters DA3 mit. Die Mitteilung des günstigsten Wertes W3 des Auswahlparameters ist optional und daher durch Einklammern des Bezugszeichens des Wertes W3 gekennzeichnet. Gleichzeitig mit der zweiten Aufforderung wird erneut der erste Zähler gestartet um ein drittes Zeitintervall ZI3 zu messen, das in diesem Ausführungsbeispiel genauso lang ist, wie das erste Zeitintervall ZI1. Der zweite Dienstanbieter DA2 entscheidet sich, dass er den Wert W3 des dritten Dienstanbieters DA3 nicht unterbieten möchte und sendet keinen neuen Wert des Auswahlparameters an die Auswahlvorrichtung AV. Der erste Dienstanbieter DA1 sendet einen neuen Wert W11 des Auswahlparameters an die Auswahlvorrichtung AV mit dem der Wert W3 des dritten Dienstanbieters DA3 unterboten wird.

Die Auswahlvorrichtung AV ermittelt nach Ablauf des dritten Zeitintervalls ZI3, dass jetzt der erste Dienstanbieter DA1 das billigste Angebot für den Dienst anbietet und prüft erneut, ob das zweite Zeitintervall ZI2 abgelaufen ist. Da dies nicht der Fall ist, sendet die Aufforderungseinheit AV eine dritte Aufforderung AUF3 zur Angabe eines Wertes des Auswahlparameters ab und startet erneut den ersten Zähler und somit das dritte Zeitintervall ZI3. Die dritte Aufforderung AUF3 wird nur noch an den dritten Dienstanbieter DA3 gesendet, da der zweite Dienstanbieter DA2 bereits bei der letzten Aufforderung AUF2 keinen günstigeren Wert des Auswahlparameters angeben wollte und diese Entscheidung als entgültig angesehen wird. Zusammen mit der dritten Aufforderung AUF3 empfängt der dritte Dienstanbieter DA3 den zu diesem Zeitpunkt günstigsten Wert, d. h. den vom ersten Dienstanbieter DA1 zuletzt angegebenen Wert W11 des Auswahlparameters. Der dritte Dienstanbieter DA3 entscheidet sich, diesen Wert W11 des Auswahlparameters nicht zu unterbieten und sendet daher keinen neuen Wert des Auswahlparameters an die Auswahlvorrichtung AV.

Selbstverständlich ist es auch möglich, dass die Auswahlvorrichtung AV immer an alle Dienstanbieter DA1, DA2, DA3, die nicht den günstigsten Wert des Auswahlparameters angegeben haben, eine erneute Aufforderung sendet, oder dass eine erneute Aufforderung immer an alle Dienstanbieter DA1, DA2, DA3, unabhängig von einem zuletzt angegebenen Wert des Auswahlparameters, gesendet wird.

Die Auswahlvorrichtung AV ermittelt nach einem zweiten Verstreichen des dritten Zeitintervalls ZI3 den ersten Dienstanbieter DA1 als günstigsten Dienstanbieter und wählt den ersten Dienstanbieter DA1 als Dienstanbieter für den Dienst D aus, da inzwischen auch das zweite Zeitintervall ZI2 abgelaufen ist. Die Auswahlvorrichtung AV weist dann entweder der Teilnehmerstation UE den ersten Dienstanbieter DA1 zu, d. h. sie initiiert automatisch einen Verbindungsaufbau zwischen der Teilnehmerstation UE und dem ersten Funkkommunikationssystem N1, oder die Auswahlvorrichtung AV teilt der Teilnehmerstation UE durch eine Information INFO mit, dass der erste Dienstanbieter DA1 für den Dienst D ausgewählt wurde. Das Einklammern der Information INFO stellt dar, dass die Übertragung der Information INFO an die Teilnehmerstation UE optional ist. Die Teilnehmerstation UE entscheidet anhand der Information INFO selbst, dass der Dienst über den ersten Dienstanbieter DA1 empfangen wird und leitet einen Verbindungsaufbau ein. Selbstverständlich kann die Teilnehmerstation UE auch einen Verbindungsaufbau ablehnen und beispielsweise eine erneute Aufforderung zur Auswahl eines Dienstanbieters DA1, DA2, DA3 an die Auswahlvorrichtung AV senden. Auf diese Weise kann die Teilnehmerstation UE versuchen, ein noch besseres Angebot zu erhalten.

Haben nach Ablauf des zweiten Zeitintervalls zwei oder mehr Dienstanbieter den gleichen Wert angegeben, so wählt die Auswahlvorrichtung per Losverfahren, d. h. zufällig einen der günstigsten Dienstanbieter aus.

Haben in einem nicht dargestellten Ausführungsbeispiel wenigstens zwei Dienstanbieter vor Ablauf des zweiten Zeitintervalls den gleichen günstigsten Wert des Auswahlparameters angegeben, werden diese Dienstanbieter durch eine entsprechende Nachricht zusammen mit einer erneuten Aufforderung zur Angabe eines Wertes des Auswahlparameters darüber informiert, dass mehrere Dienstanbieter den gleichen Wert des Auswahlparameters angegeben haben. Die betroffenen Dienstanbieter können ihr Angebot so besser einschätzen und sie erhalten die Möglichkeit, ihr eigenes Angebot zu verbessern, d. h. die Konkurrenten zu unterbieten, und ein Losverfahren zu verhindern.

Erhält die Auswahlvorrichtung AV innerhalb des ersten oder des dritten Zeitintervalls ZI1, ZI3 keine Werte von den Dienstanbietern DA1, DA2, DA3, so wiederholt sie ihre Aufforderung solange, bis sie Werte empfängt oder bis das zweite Zeitintervall ZI2 abgelaufen ist. Liegen sogar nach Ablauf des zweiten Zeitintervalls ZI2 keine Werte vor, so teilt die Auswahlvorrichtung AV dies der Teilnehmerstation UE mit. Die Teilnehmerstation kann daraufhin eine erneute Auswahl eines Dienstanbieters einleiten.

Die Dauer des ersten und des dritten Zeitintervalls ZI1, ZI3 wird beispielsweise vom WLAN Betreiber festgelegt. Die Dauer kann an die Übertragungszeiten zu den Dienstanbietern angepasst und für jeden Dienst individuell festgelegt werden. Erstes und drittes Zeitintervall ZI1, ZI3 können selbstverständlich sowohl gleich lang sein als auch unterschiedliche Längen aufweisen. Insbesondere kann das dritte Zeitintervall ZI3 kürzer sein als das erste Zeitintervall ZI1, um so auch dann eine erneute Anforderung an die Dienstanbieter senden zu können, wenn das zweite Zeitintervall ZI2 bei einer erneuten, mit der Dauer des ersten Zeitintervalls ZI1 erfolgenden Aufforderung abgelaufen wäre.

Sollte die von der Teilnehmerstation UE vorgegebene Dauer des zweiten Zeitintervalls ZI2 kleiner sein als die Dauer des ersten Zeitintervalls ZI1, legt die Auswahlvorrichtung AV das zweite Zeitintervall auf eine Dauer fest, die größer oder gleich der Dauer des ersten Zeitintervalls ZI1 ist. Auch das dritte Zeitintervall ZI3 kann selbstverständlich von der Teilnehmerstation UE vorgegeben werden.

Selbstverständlich kann auch das zweite Zeitintervall ZI2 vom WLAN Betreiber festgelegt werden.

Dienstanbieter können der Teilnehmerstation UE auch den Dienst D anbieten, ohne über ein eigenes Funkkommunikationssystem zu verfügen. Durch einen entsprechenden Vertrag mit dem Betreiber des WLANs können auch Dienstanbieter ohne eigene Infrastruktur den Dienst D anbieten. Übertragen wird der Dienst in diesem Fall gegen eine Nutzungsgebühr direkt vom WLAN. Selbstverständlich kann der Betreiber des WLAN auch selbst als Dienstanbieter auftreten.

## Patentansprüche

1. Verfahren zur Auswahl eines Dienstanbieters (DA1) für einen von einer mobilen Station (UE) über ein Funkzugangsnetz eines Funkkommunikationssystems (WLAN) empfangbaren und von wenigstens zwei Dienstanbietern (DA1, DA2, DA3) über das Funkzugangsnetz des Funkkommunikationssystems (WLAN) angebotenen Dienst (D), **dadurch gekennzeichnet, dass**
- eine Auswahlvorrichtung (AV) von der mobilen Station (UE) über eine Funkschnittstelle des Funkzugangsnetzes eine Aufforderung (AUFUE) zur Auswahl des Dienstanbieters empfängt,
- die Dienstanbieter (DA1, DA2, DA3) durch die Auswahlvorrichtung (AV) jeweils zur Angabe eines Werts eines Auswahlparameters (PAR) aufgefordert (AUF1) werden,
- und die Auswahlvorrichtung (AV) in Abhängigkeit von den angegebenen Werten (W1, W2, W3) des Auswahlparameters (PAR) einen der Dienstanbieter (DA1) für den Dienst (D) auswählt.

2. Verfahren nach Anspruch 1, bei dem
die mobile Station (UE) über den für den Dienst (D) ausgewählten Dienstanbieter (DA1) informiert wird.

3. Verfahren nach Anspruch 1, bei dem
der mobilen Station (UE) der für den Dienst ausgewählte Dienstanbieter (DA1) von der Auswahlvorrichtung (AV) für einen Verbindungsaufbau über die Funkschnittstelle zugewiesen wird.

4. Verfahren nach einem der Ansprüche 1 bis 3, bei dem ein erstes Zeitintervall (ZI1) festgelegt wird, innerhalb dessen die Dienstanbieter (DA1, DA2, DA3) nach der Aufforderung (AUF1) zur Angabe der Werte des Auswahlparameters (PAR) ihre Werte (W1, W2, W3) angeben können.

5. Verfahren nach einem der Ansprüche 1 bis 4, bei dem ein zweites Zeitintervall (ZI2) festgelegt wird, nach dessen Ablauf die Auswahl eines Dienstanbieters (DA1) für den Dienst (D) erfolgt.

6. Verfahren nach Anspruch 4 und 5, bei dem
- die nach Ablauf des ersten Zeitintervalls (ZI1) von den Dienstanbietern (DA1, DA2, DA3) angegebenen Werte (W1, W2, W3, W11) des Auswahlparameters (PAR) miteinander verglichen werden,
- ein Dienstanbieter (DA3, DA1) mit dem für die mobile Station (UE) günstigsten Wert (W3, W11) des Auswahlparameters (PAR) ermittelt wird,
- und wenigstens ein Teil der Dienstanbieter (DA1, DA2, DA3) durch die Auswahlvorrichtung (AV) erneut aufgefordert (AUF2, AUF3) wird, innerhalb eines dritten, festlegbaren Zeitintervalls (ZI3) jeweils einen Wert des Auswahlparameters (PAR) anzugeben.

7. Verfahren nach Anspruch 6, bei dem
der günstigste Wert (W3, W11) des Auswahlparameters (PAR) den Dienstanbietern (DA1, DA2, DA3), zusammen mit der erneuten Aufforderung (AUF2, AUF3) einen Wert des Auswahlparameters (PAR) anzugeben, mitgeteilt wird.

8. Verfahren nach Anspruch 6 oder 7, bei dem
die Dienstanbieter (DA1, DA2, DA3), zusammen mit der erneuten Aufforderung (AUF2, AUF3) einen Wert des Auswahlparameters (PAR) anzugeben, informiert werden, falls derselbe günstigste Wert (W3, W11) des Auswahlparameters von wenigstens zwei Dienstanbietern angegeben wurde.

9. Verfahren nach einem der vorstehenden Ansprüche, bei dem der Auswahlparameter (PAR) von der mobilen Station (UE) vorgegeben wird.

10. Verfahren nach einem der vorstehenden Ansprüche, bei dem als Auswahlparameter (PAR) ein Preis des Dienstes (D) verwendet wird.

11. Verfahren nach einem der Ansprüche 1 bis 9, bei dem als Auswahlparameter (PAR) eine Übertragungsqualität des Dienstes (D) verwendet wird.

12. Auswahlvorrichtung (AV) zur Auswahl eines Dienstanbieters (DA1, DA2, DA3) für einen von einer mobilen Station (UE) über ein Funkzugangsnetz eines Funkkommunikationssystems (WLAN) empfangbaren und von wenigstens zwei Dienstanbietern über das Funkzugangsnetz des Funkkommunikationssystems angebotenen Dienst (D), **gekennzeichnet durch**
- Mittel zum Empfang (SE) einer von der mobilen Station (UE) über eine Funkschnittstelle des Funkzugangsnetzes gesendeten Aufforderung (AUFUE) zur Auswahl eines Dienstanbieters (DA1, DA2, DA3),
- Mittel zur Aufforderung (SE, P) der Dienstanbieter (DA1, DA2, DA3), jeweils einen Wert (W1, W2, W3) eines Auswahlparameters (PAR) anzugeben,
- und Mittel zur Auswahl (P) eines der Dienstanbieter (DA1) für den Dienst (D) in Abhängigkeit von den angegebenen Werten (W1, W2, W3) des Auswahlparameters (PAR).

## Claims

1. Method for selecting a service provider (DA1) for a service (D) that can be received by a mobile station (UE) via a radio access network of a radio communication system (WLAN) and is provided by at least two service providers (DA1, DA2, DA3) via the radio access network of the radio communication system (WLAN), **characterised in that**
- a selecting device (AV) receives from the mobile station (UE) via a radio interface of the radio access network a request (AUFUE) to select the service provider,
- the service providers (DA1, DA2, DA3) are each requested (AUF1) by the selecting device (AV) to indicate a value of a selection parameter (PAR), and
- the selecting device (AV) selects one of the service providers (DA1) for the service (D) as a function of the indicated values (W1, W2, W3) of the selection parameter (PAR).

2. Method according to claim 1, wherein
the mobile station (UE) is informed about the service provider (DA1) selected for the service (D).

3. Method according to claim 1, wherein
the selecting device (AV) assigns the mobile station (UE) the service provider (DA1) selected for the service (D) for a connection setup via the radio interface.

4. Method according to one of claims 1 to 3, wherein a first time interval (ZI1) is specified within which, after the request (AUF1) to indicate the values of the selection parameter (PAR), the service providers (DA1, DA2, DA3) are able to indicate their values (W1, W2, W3).

5. Method according to one of the claims 1 to 4, wherein a second time interval (ZI2) is specified on whose expiration a service provider (DA1) is selected for the service (D).

6. Method according to claim 4 and 5, wherein
- the values (W1, W2, W3, W11) of the selection parameter (PAR) that were indicated by the service providers (DA1, DA2, DA3) on expiration of the first time interval (ZI1) are compared with each other,
- a service provider (DA3, DA1) is determined having the most favourable value (W3, W11) of the selection parameter (PAR) for the mobile station (UE), and
- at least some of the service providers (DA1, DA2, DA3) are again requested (AUF2, AUF3) by the selecting device (AV) each to indicate a value of the selection parameter (PAR) within a third, specifiable time interval (ZI3).

7. Method according to claim 6, wherein
the service providers are notified of the most favourable value (W3, W11) of the selection parameter (PAR) along with the renewed request (AUF2, AUF3) to indicate a value of the selection parameter (PAR).

8. Method according to claim 6 or 7, wherein
the service providers (DA1, DA2, DA3) will, along with the renewed request (AUF2, AUF3) to indicate a value of the selection parameter (PAR), be informed if the same most favourable value (W3, W11) of the selection parameter (PAR) has been indicated by at least two service providers.

9. Method according to one of the preceding claims, wherein the selection parameter (PAR) is predefined by the mobile station (UE).

10. Method according to one of the preceding claims, wherein a price for the service (D) is applied as the selection parameter (PAR).

11. Method according to one of the claims 1 to 9, wherein a transmission quality of the service (D) is applied as the selection parameter (PAR).

12. Selecting device (AV) for selecting a service provider (DA1, DA2, DA3) for a service (D) that can be received by a mobile station (UE) via a radio access network of a radio communication system (WLAN) and is provided by at least two service providers via the radio access network of the radio communication system, **characterised by**
- means for receiving (SE) a request (AUFUE) sent by the mobile station (UE) via a radio interface of the radio access network to select a service provider (DA1, DA2, DA3),
- means for requesting (SE, P) the service providers (DA1, DA2, DA3) each to indicate a value (W1, W2, W3) of a selection parameter (PAR), and
- means for selecting (P) one of the service providers (DA1) for the service (D) as a function of the indicated values (W1, W2, W3) of the selection parameter (PAR

## Revendications

1. Procédé pour sélectionner un prestataire de services (DA1) pour un service (D) pouvant être reçu d'une station (UE) mobile par l'intermédiaire d'un réseau d'accès radio d'un système de radiocommunication (WLAN) et proposé par au moins deux prestataires de service (DA1, DA2, DA3) par l'intermédiaire du réseau d'accès radio du système de radiocommunication (WLAN), **caractérisé en ce que**
- un dispositif de sélection (AV) reçoit de la station (UE) mobile par l'intermédiaire d'une interface radio du réseau d'accès radio une invitation (AUFUE) à sélectionner le prestataire de services,
- les prestataires de services (DA1, DA2, DA3) sont invités par le dispositif de sélection (AV) respectivement à indiquer (AUF1) une valeur d'un paramètre de sélection (PAR),
- et le dispositif de sélection (AV) sélectionne l'un des prestataires de services (DA1) pour le service (D) en fonction des valeurs (W1, W2, W3) indiquées du paramètre de sélection (PAR).

2. Procédé selon la revendication 1, dans lequel la station (UE) mobile est informée sur le prestataire de services (DA1) sélectionné pour le service (D).

3. Procédé selon la revendication 1, dans lequel le prestataire de services (DA1) sélectionné pour le service est attribué à la station (UE) mobile par le dispositif de sélection (AV) pour l'établissement de liaison par l'intermédiaire d'un interface radio.

4. Procédé selon l'une quelconque des revendications 1 à 3, dans lequel un premier intervalle de temps (ZI1) est défini, à l'intérieur duquel les prestataires de services (DA1, DA2, DA3) peuvent indiquer leurs valeurs (W1, W2, W3) après l'invitation (AUF1) à indiquer les valeurs du paramètre de sélection (PAR).

5. Procédé selon l'une quelconque des revendications 1 à 4, dans lequel
un second intervalle de temps (ZI2) est défini, après l'écoulement duquel la sélection d'un prestataire de services (DA1) intervient pour le service (D).

6. Procédé selon les revendications 4 et 5, dans lequel
- les valeurs (W1, W2, W3, W11) du paramètre de sélection (PAR), indiquées après l'écoulement du premier intervalle de temps (ZI1) par les prestataires de service (DA1, DA2, DA3), sont comparées les unes avec les autres,
- un prestataire de services (DA3, DA1) est déterminé avec la valeur (W3, W11), la plus avantageuse pour la station (UE) mobile, du paramètre de sélection (PAR),
- et au moins une partie des prestataires de services (DA1, DA2, DA3) est invitée à nouveau (AUF2, AUF3) par le dispositif de sélection (AV) à indiquer à l'intérieur d'un troisième intervalle de temps (ZI3) définissable à chaque fois une valeur du paramètre de sélection (PAR).

7. Procédé selon la revendication 6, dans lequel la valeur (W3, W11) la plus avantageuse du paramètre de sélection (PAR) est communiquée aux prestataires de service (DA1, DA2, DA3) en même temps que la nouvelle invitation (AUF2, AUF3) à indiquer une valeur du paramètre de sélection (PAR).

8. Procédé selon la revendication 6 ou 7, dans lequel les prestataires de services (DA1, DA2, DA3) sont informés en même temps que la nouvelle invitation (AUF2, AUF3) à indiquer une valeur du paramètre de sélection (PAR) dans le cas où la même valeur la plus avantageuse (W3, W11) du paramètre de sélection a été indiquée par au moins deux prestataires de services.

9. Procédé selon l'une quelconque des revendications précédentes, dans lequel
le paramètre de sélection (PAR) est prédéfini par la station (UE) mobile.

10. Procédé selon l'une quelconque des revendications précédentes, dans lequel
un prix du service (D) est utilisé comme paramètre de sélection (PAR).

11. Procédé selon l'une quelconque des revendications 1 à 9, dans lequel
une qualité de transmission du service (D) est utilisée comme paramètre de sélection (PAR).

12. Dispositif de sélection (AV) pour la sélection d'un prestataire de services (DA1, DA2, DA3) pour un service (D) pouvant être reçu d'une station (UE) mobile par l'intermédiaire d'un réseau d'accès radio d'un système de radiocommunication (WLAN) et proposé par au moins deux prestataires de services par l'intermédiaire du réseau d'accès radio du système de radiocommunication, **caractérisé par**
- des moyens pour la réception (SE) d'une invitation (AUFUE) envoyée par la station (UE) mobile par l'intermédiaire d'une interface radio du réseau d'accès radio pour la sélection d'un prestataire de services (DA1, DA2, DA3),
- des moyens pour l'invitation (SE, P) des prestataires de services (DA1, DA2, DA3) à indiquer respectivement une valeur (W1, W2, W3) d'un paramètre de sélection (PAR),
- et des moyens pour la sélection (P) d'un des prestataires de services (DA1) pour le service (D) en fonction des valeurs (W1, W2, W3) indiquées du paramètre de sélection (PAR).
